# FASCICULE DE BREVET EUROPEEN

(11) **EP 2 227 424 B1**
(45) Date de publication et mention de la délivrance du brevet: **29.07.2015**
(21) Numéro de dépôt: 08870344.2
(22) Date de dépôt: 22.12.2008
(51) Int. Cl.: B65G 51/02

(54) **DISPOSITIF DE STOCKAGE ET DE DISTRIBUTION DE PETITES PIECES TELLES DES RIVETS**
VORRICHTUNG ZUR LAGERUNG UND AUSGABE KLEINER TEILE, Z. B. NIETEN
DEVICE FOR STORING AND DISPENSING SMALL PARTS SUCH AS RIVETS

(30) Priorité: 07.01.2008 FR 0850062
(43) Date de publication de la demande: 15.09.2010
(73) Titulaire: Eris, 31130 Flourens (FR)
(72) Inventeur: AURIOL, Pierre, F-31130 Flourens (FR); AURIOL, Jean-Marc, F-31130 Flourens (FR)
(74) Mandataire: Richebourg, Michel François
(86) Numéro de dépôt international: PCT/FR2008/052403
(87) Numéro de publication internationale: WO 2009/087333

(56) Documents cités:
- EP-A1- 0 511 093
- FR-A- 2 640 245
- US-A- 5 181 315
- US-A- 5 733 089
- US-B2- 6 932 544
- US-B2- 6 986 450

## Description

### DOMAINE D'APPLICATION DE L'INVENTION

La présente invention a trait au domaine du stockage et de la distribution de petites pièces tels des rivets et notamment aux adaptations permettant de réaliser ces fonctions dans les meilleures conditions.

### DESCRIPTION DE L'ART ANTÉRIEUR

Il existe dans l'art antérieur une pluralité de moyens de stockage et de distribution pour des pièces tels les rivets. Ces dispositifs ont notamment pour fonction d'assurer un stockage intermédiaire de pièces de mêmes dimensions et selon une même orientation à des fins d'alimentation d'un effecteur de rivetage.

Ces dispositifs sont remplis au moyen de machines de remplissage assurant en sortie de bol vibrant le contrôle de l'orientation. Ils peuvent être utilisés séparément au regroupés de façon à proposer au circuit de distribution auquel ils sont associés une grande quantité de pièces à distribuer ou une pluralité de modèles de pièces à distribuer. La distribution est réalisée unitairement.

Un exemple de moyen de stockage et de distribution est décrit dans le document EP 511093.

L'invention concerne plus particulièrement un dispositif de stockage et de distribution du type de celui comprenant un contenant parallèlépipèdique rigide accueillant au moins un enroulement d'un tube de stockage souple, au moins une extrémité dudit tube débouchant à l'extérieur, ladite extrémité étant équipée d'une tête de distribution, l'autre extrémité étant alimentée en fluide de transport à des fins de mise en mouvement des pièces.

La demanderesse a constaté que plusieurs paramètres étaient susceptibles d'être optimisés, parmi ceux-ci :
- le matériau du tube doit associer souplesse et dureté pour autoriser l'enroulement sans pliage et faciliter le déplacement,
- les spires d'une couche d'enroulement à l'autre doivent être liées tout en laissant une élasticité relative pour éviter le coincement,
- la tête de distribution doit pouvoir être démontée du contenant sans démontage de l'ensemble,
- l'alimentation en fluide de déplacement doit être simplifiée,
- etc...

Le choix du matériau du tube est d'autant plus important que son âme creuse peut adopter un profil polygonal qu'il présente une épaisseur différente selon ses zones angulaires ce qui peut contribue à une fragilisation et à une déformation non souhaitées.

### DESCRIPTION DE L'INVENTION

Partant de cet état de fait et d'un cahier des charges préétablies, la demanderesse a mené des recherches visant à optimiser l'exploitation de tels moyens de stockage et de distribution.

Ces recherches ont abouti à la conception particulière d'un dispositif de stockage et de distribution de pièces du type de celui comprenant un contenant parallèlépipèdique rigide accueillant au moins un enroulement d'un tube de stockage souple, au moins une extrémité dudit tube débouchant à l'extérieur, ladite extrémité étant équipée d'une tête de distribution, l'autre extrémité étant alimentée en fluide de mise en mouvement.

Selon l'invention, le dispositif est remarquable en ce que le tube utilisé pour le stockage des pièces est en polyuréthane à base polyéther d'environ 64 shore D. Cette dureté est celle qui, dans le rayon d'enroulement et selon le diamètre du tube, permet d'obtenir la souplesse et la dureté nécessaires à l'enroulement sans pli ni aplatissement qui constituerait un obstacle au bon déplacement des pièces tels des rivets. De plus, une telle dureté propose une surface de glissement sans grand coefficient de frottement à l'intérieur du tube répondant ainsi aux objectifs de l'invention. Une telle dureté assure en outre la résistance nécessaire pour éviter l'éclatement du tube qui est alimenté en fluide sous pression tel de l'air comprimé. Une telle dureté a pour autre avantage d'éviter un quelconque traitement de surface dans l'âme creuse du tube pour autoriser la libre circulation des pièces à l'intérieur.

Selon une autre caractéristique particulièrement avantageuse de l'invention, le tube est enroulé sur plusieurs couches horizontales, la liaison entre les différentes couches étant réalisée par un moyen adhésif. L'utilisation d'un tel moyen tel un ruban adhésif entre les couches garantit la souplesse nécessaire dans la liaison entre les spires ainsi qu'un rayon de courbure régulièrement uniforme sur le longueur du tube pour une bonne circulation des pièces.

Selon une autre caractéristique particulièrement avantageuse de l'invention, lors du montage du dispositif, l'enroulement du tube s'opère à plat de l'extérieur vers l'intérieur. Les enroulements sont disposés en couches horizontales entre lesquelles est préférablement positionné ledit moyen adhésif. De plus, le plus petit diamètre d'enroulement est judicieusement calculé pour que le tube présente un rayon de courbure autorisant le déplacement des pièces. Le plus grand diamètre est défini par le cadre formé par le parallélépipède du contenant.

Selon une autre caractéristique particulièrement avantageuse de l'invention, l'extrémité de sortie des pièces est équipée d'un tête de distribution dont les composants de distribution unitaire sont mis en oeuvre par le même fluide que celui destiné au transport des pièces. Afin de simplifier l'alimentation en fluide de transport au niveau de l'autre extrémité de l'enroulement, un conduit vient faire communiquer le circuit d'alimentation en fluide de la tête de distribution avec l'autre extrémité de l'enroulement afin qu'une seule buse d'alimentation soit nécessaire pour les deux fonctions : commande de la distribution unitaire des pièces en sortie de tube et déplacement des pièces dans le tube.

Selon une autre caractéristique particulièrement avantageuse de l'invention, la conception de la tête de distribution unitaire facilite son démontage à des fins de maintenance ou de changement, sans nécessiter le démontage de la cassette.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est une vue de dessus d'un mode de réalisation d'un dispositif de stockage et de distribution conforme à l'invention,
La figure 2 est une vue de côté en coupe selon le plan de coupe A-A du dispositif de la figure 1,
La figure 3 est une vue de côté en coupe du détail de la tête de distribution,
La figure 4 est une vue extérieure en perspective du dispositif de la figure 1.

### DESCRIPTION DES MODES DE RÉALISATION PRÉFÉRÉS

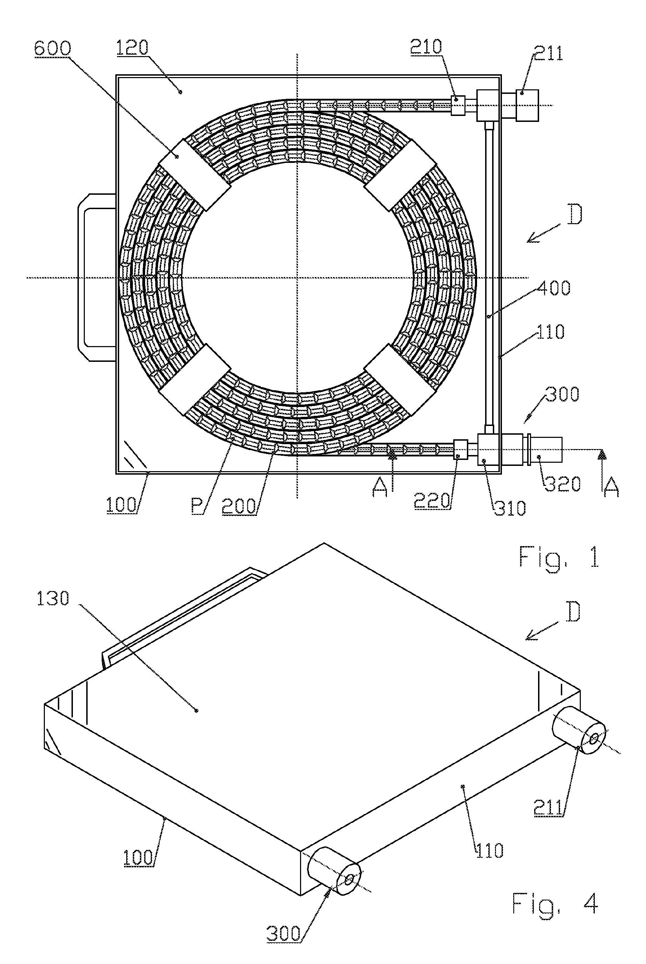

Tel qu'illustré sur le dessin de la figure 1, le dispositif de stockage et de distribution de l'invention référencé D dans son ensemble est du type de celui comprenant un contenant parallèlépipèdique rigide référencé 100 accueillant plusieurs enroulements d'un tube de stockage souple 200. Comme illustrée, une extrémité 210 dudit tube débouche à l'extérieur par une extrémité d'une face verticale 110 du parallélépipède formé par le contenant 100 et l'autre extrémité débouche à l'autre extrémité de ladite face verticale 110, cette extrémité 220 étant équipée d'une tête de distribution 300, l'autre extrémité 210 étant alimentée en fluide de transport.

Selon un choix technologique de l'invention, la première extrémité 210 du tube 200 est utilisée pour le remplissage du dispositif D en pièces P puis est rebouchée par un moyen d'obturation 211.

Afin d'assurer le déplacement des pièces P à l'intérieur du tube 200, un fluide de mise en mouvement, par exemple de l'air comprimé, est introduit au niveau de cette extrémité 210.

Cette alimentation en fluide de mise en mouvement a fait l'objet d'une attention particulière pour l'optimiser afin de diminuer les composants la mettant en oeuvre. Ainsi, selon une caractéristique particulièrement judicieuse de l'invention, un conduit d'alimentation 400 en air comprimé vient faire communiquer le conduit d'alimentation de la commande du nez de distribution 300 avec l'extrémité 210. Cette caractéristique permet de ne nécessiter que d'une arrivée en air comprimé pour aussi bien assurer la commande du nez de distribution 300 que pour assurer la mise en mouvement des pièces P.

Selon une autre caractéristique particulièrement avantageuse, ce conduit 400 est disposé à l'intérieur de l'enceinte définie par le contenant 100 ce qui en garantit la protection.

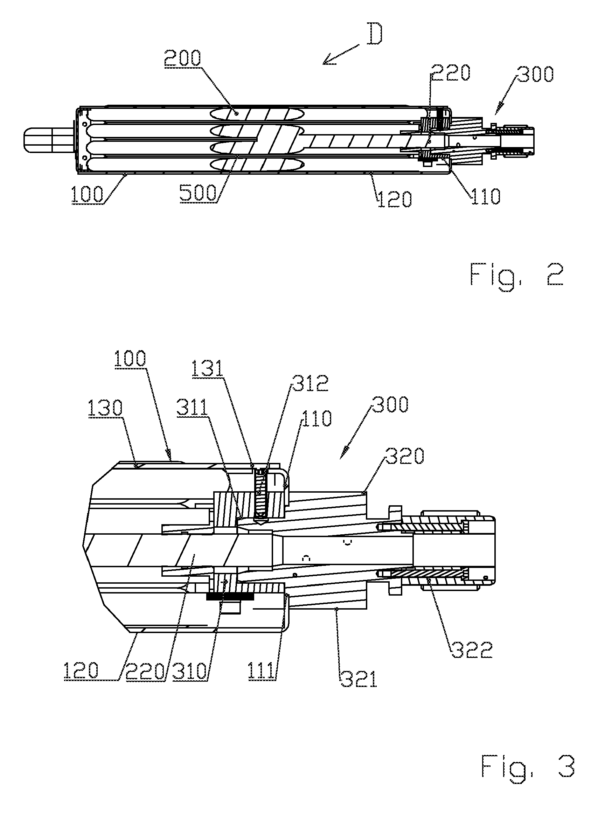

Selon une autre caractéristique particulièrement avantageuse de l'invention illustrée par le dessin de la figure 2, le tube 200 est enroulé à plat de l'extérieur vers l'intérieur sur plusieurs couches horizontales, la liaison entre les différentes couches étant réalisée par un moyen adhésif. Selon un mode de réalisation préféré, la première couche est assujettie au fond 120 du contenant 100 au moyen d'un ruban adhésif double face non illustré. Un tel ruban adhésif 500 est également utilisé pour assujettir les couches entre elles. De plus, afin que les enroulements et les spires réalisées conservent leur géométrie, un ruban adhésif simple face ou un collier de matière 600 vient serrer sans les déformer les spires et les enroulements entre eux.

La tête de distribution 300 du dispositif D a fait aussi l'objet d'une attention particulière dans sa conception afin de permettre son démontage à des fins de maintenance ou de remplacement sans nécessiter le démontage du dispositif D.

Pour ce faire, la tête de distribution 300 comme illustrée sur le dessin de la figure 3 comprend deux parties :
- une première partie intérieure 310 qui, recevant l'extrémité 220 du tube 200, est fixée au contenant 100 et est disposée coaxialement à l'orifice 111 pratiqué dans la paroi 110 du contenant 100 pour la sortie des pièces P du tube 200 vers l'extérieur,
- une deuxième partie extérieure 320 qui, venant se fixer à la partie intérieure 310 en traversant l'orifice 111, présente une âme creuse et est équipée du module de distribution unitaire 321 garantissant la sortie unitaire des pièces P et communique avec l'alimentation en fluide sous pression au moyen d'un embout 322 préformé à cet effet.

Afin de rendre la partie extérieure 320 escamotable, la partie intérieure 311 comporte un évidement cylindrique 311 coaxial à l'axe de sortie des pièces P avec lequel vient s'introduire une forme cylindrique extérieure 322 de la partie extérieure 320. Afin de maintenir en position cette liaison cylindrique, une vis de fixation 312 vient traverser la partie intérieure 310 pour déboucher dans le logement cylindrique 311 et appuyer sur la forme cylindrique 322. La partie intérieure 310 et son taraudage sont disposés de sorte que la tête de la vis puisse être accessible de l'extérieur du contenant par un orifice 131 prévue à cet effet dans la face supérieure 130 du contenant 100.

Le vissage ou le dévissage de la vis 312 permettent ainsi de fixer ou de libérer la partie extérieure 320 du nez de distribution 300 sans démonter le contenant 100 et sans libérer l'extrémité 220 du tube 200 qui reste ainsi calée en position lors des opérations de démontage ou de montage de cette partie très technique du nez de distribution 300.

Selon un mode de réalisation préféré, la face supérieure 130 du contenant 100 est réalisée dans un matériau transparent offrant un accès visuel au contenu du dispositif D. En effet, conformément à l'invention, au moins une paroi ou face du contenant 100 est réalisée au moins partiellement dans un matériau transparent. En effet, associé au fait que le tube de stockage 200 est en matériau transparent, le dispositif permet d'informer par contrôle visuel permanent de son taux de remplissage ou du type de pièces stockées.

On comprend que le dispositif qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Dispositif (D) de stockage et de distribution de pièces (P) comprenant un contenant parallèlépipèdique rigide (100) accueillant au moins un enroulement d'un tube de stockage souple (200), au moins une extrémité (220) dudit tube (200) débouchant à l'extérieur, ladite extrémité (220) étant équipée d'une tête de distribution (300), l'autre extrémité (210) étant alimentée en fluide de mise en mouvement, **CARACTÉRISÉ PAR LE FAIT QUE** le tube (200) utilisé pour le stockage des pièces (P) est en polyuréthane à base polyéther d'environ 64 shore D.

2. Dispositif (D) selon la revendication 1, **CARACTÉRISÉ PAR LE FAIT QUE** le tube (200) est enroulé à plat sur plusieurs couches horizontales, la liaison entre les différentes couches étant réalisée par un moyen adhésif.

3. Dispositif (D) selon la revendication 1, **CARACTÉRISÉ PAR LE FAIT QUE** l'extrémité de sortie (220) des pièces (P) est équipée d'un tête de distribution (300) dont les composants de distribution unitaire sont mis en oeuvre par le même fluide que celui destiné au transport des pièces (P).

4. Dispositif (D) selon la revendication 1, **CARACTÉRISÉ PAR LE FAIT QU'**un conduit (400) vient faire communiquer le circuit d'alimentation en fluide de la tête de distribution (300) avec l'autre extrémité (210) de l'enroulement.

5. Dispositif (D) selon la revendication 1, **CARACTÉRISÉ PAR LE FAIT QUE** la tête de distribution (300) comprend deux partiels :
- une première partie intérieure (310) qui, recevant l'extrémité (220) du tube (200), est fixée au contenant (100) et est disposée coaxialement à l'orifice (111) pratiqué dans la paroi (110) du contenant (100) pour la sortie des pièces (P) du tube (200) vers l'extérieur,
- une deuxième partie extérieure (320) démontable qui, venant se fixer à la partie intérieure (310) en traversant l'orifice (111), présente une âme creuse et est équipée du module de distribution unitaire (321) garantissant la sortie unitaire des pièces et communique avec l'alimentation en fluide sous pression au moyen d'un embout (322) préformé à cet effet.

6. Dispositif (D) selon la revendication 1, **CARACTÉRISÉ PAR LE FAIT QU'**au moins une paroi ou face (130) du contenant (100) est réalisée au moins partiellement dans un matériau transparent.

7. Dispositif (D) selon la revendication 1, **CARACTÉRISÉ PAR LE FAIT QUE** ledit tube (200) est transparent.

8. Dispositif (D) selon revendication 1, **CARACTÉRISÉ PAR LE FAIT QUE** l'enroulement du tube (200) s'opère à plat de l'extérieur vers l'intérieur.

9. Dispositif (D) selon la revendication 1, **CARACTÉRISÉ PAR LE FAIT QUE** le plus petit diamètre intérieur de l'enroulement est calculé pour que le tube (200) présente un rayon de courbure autorisant le déplacement des pièces (P).

10. Dispositif (D) selon la revendication 2, **CARACTÉRISÉ PAR LE FAIT QU'**un moyen adhésif (500) est disposé entre les couches horizontales de spires.

## Patentansprüche

1. Vorrichtung (D) zum Lagern und Abgeben von Teilen (P), einen steifen quaderförmigen Behälter (100) umfassend, der zumindest eine Wicklung eines flexiblen Lagerrohres (200) aufnimmt, wobei zumindest ein Ende (220) des besagten Rohres (200) nach außen mündet, und das besagte Ende (220) mit einem Abgabekopf (300) ausgestattet ist, und das andere Ende (210) mit einer Antriebsflüssigkeit versorgt wird, **dadurch gekennzeichnet, dass** das Rohr (200), das zum Lagern der Teile (P) verwendet wird, aus Polyurethan auf Basis von Polyether mit einer Härte von etwa 64 Shore D ist.

2. Vorrichtung (D) nach Anspruch 1, **dadurch gekennzeichnet, dass** das Rohr (200) flach in mehreren horizontalen Schichten eingerollt ist, und die Verbindung zwischen den verschiedenen Schichten durch ein Klebemittel erfolgt.

3. Vorrichtung (D) nach Anspruch 1, **dadurch gekennzeichnet, dass** das Ausgangsende (220) der Teile (P) mit einem Abgabekopf (300) ausgestattet ist, dessen Komponenten zur Einzelabgabe durch dieselbe Flüssigkeit angetrieben werden, wie jene, die für den Transport der Teile (P) bestimmt ist.

4. Vorrichtung (D) nach Anspruch 1, **dadurch gekennzeichnet, dass** ein Kanal (400) den Flüssigkeitsversorgungskreis des Abgabekopfes (300) mit dem anderen Ende (210) der Wicklung verbindet.

5. Vorrichtung (D) nach Anspruch 1, **dadurch gekennzeichnet, dass** der Abgabekopf (300) zwei Abschnitte umfasst:
- einen ersten inneren Abschnitt (310), der das Ende (220) des Rohres (200) aufnimmt und auf dem Behälter (100) befestigt, und koaxial an der Öffnung (111) angeordnet ist, die in der Wand (110) des Behälters (100) für den Auslass der Teile (P) aus dem Rohr (200) nach außen eingearbeitet ist,
- einen zweiten abnehmbaren äußeren Abschnitt (320), der am inneren Abschnitt (310) durch die Öffnung (111) hindurch befestigt wird, einen hohlen Kern aufweist und mit einem Einzelabgabemodul (321) ausgestattet ist, das den einzelnen Auslass der Teile gewährleistet und über ein zu diesem Zweck vorgeformtes Ansatzstück (322) mit der Druckflüssigeitsversorgung verbunden ist.

6. Vorrichtung (D) nach Anspruch 1, **dadurch gekennzeichnet, dass** zumindest eine Wand oder Seite (130) des Behälters (100) zumindest teilweise aus einem transparenten Material gefertigt ist.

7. Vorrichtung (D) nach Anspruch 1, **dadurch gekennzeichnet, dass** das besagte Rohr (200) transparent ist.

8. Vorrichtung (D) nach Anspruch 1, **dadurch gekennzeichnet, dass** die Wicklung des Rohres (200) flach von außen nach innen erfolgt.

9. Vorrichtung (D) nach Anspruch 1, **dadurch gekennzeichnet, dass** der kleinste Innendurchmesser der Wicklung berechnet wird, damit das Rohr (200) einen Biegeradius aufweist, der die Bewegung der Teile (P) ermöglicht.

10. Vorrichtung (D) nach Anspruch 2, **dadurch gekennzeichnet, dass** ein Klebemittel (500) zwischen den horiztonalen Windungschichten angeordnet ist.

## Claims

1. Device (D) for storing and dispensing parts (P) including a rigid parallelepiped container (100) receiving at least one winding of a flexible storage tube (200), in which at least one end (220) of said tube (200) opens externally, in which said end (220) is equipped with a dispensing head (300) and the other end (210) is supplied with movement fluid, **characterized in that** the tube (200) used for storing parts (P) is made of polyurethane based on polyether of around 64 shore D.

2. Device (D) according to claim 1, **characterized in that** the tube (200) is wound flatly over a plurality of horizontal layers, in which the connection between the various layers is achieved by adhesive means.

3. Device (D) according to claim 1, **characterized in that** the part (P) outlet end (220) is equipped with a dispensing head (300) of which the unitary dispensing components are implemented by the same fluid as that intended for transporting parts (P).

4. Device (D) according to claim 1, **characterized in that** a conduit (400) establishes communication between the fluid supply circuit of the dispensing head (300) and the other end (210) of the winding.

5. Device (D) according to claim 1, **characterized in that** the dispensing head (300) includes two portions:
- a first internal portion (310), which, receiving the end (220) of the tube (200), is attached to the container (100) and is arranged coaxially to the orifice (111) formed in the wall (110) of the container (100) for the outlet of parts (P) from the tube (200) toward the outside,
- a second external portion (320) disassembled, which, attached to the internal portion (310) by passing through the orifice (111), has a hollow core and is equipped with the unitary dispensing module (321) ensuring the unitary outlet of parts and communicates with the pressurized fluid supply by means of an end piece (322) preformed for this purpose.

6. Device (D) according to claim 1, **characterized in that** at least one wall or face (130) of the container (100) is made at least partially of a transparent material.

7. Device (D) according to claim 1, **characterized in that** said tube (200) is transparent.

8. Device (D) according to claim 1, **characterized in that** the tube (200) is wound flatly from the outside to the inside.

9. Device (D) according to claim 1, **characterized in that** the smallest internal diameter of the winding is calculated so that the tube (200) has a radius of curvature allowing the movement of parts (P).

10. Device (D) according to claim 2, **characterized in that** adhesive means (500) are arranged between the horizontal layers of turns.
